# EUROPEAN PATENT APPLICATION

(11) **EP 4 807 951 A1**
(43) Date of publication of application: **16.09.2026**
(21) Application number: 23958200.0
(22) Date of filing: 06.11.2023
(51) Int. Cl.: H02K 5/00, H02K 5/22

(54) **ELECTRIC DEVICE AND SHOCK ABSORBER COMPRISING ELECTRIC DEVICE**

(71) Applicant: Astemo, Ltd., Chiyoda-ku, Tokyo 1000004 (JP)
(72) Inventor: MURAKAMI, Yosuke, Hitachinaka-shi, Ibaraki 312-8503 (JP)
(74) Representative: Nordmeyer, Philipp Werner
(86) International application number: PCT/JP2023/039828
(87) International publication number: WO 2025/099793

(57) **Abstract**

An electric device according to the present invention comprises an electric actuator (31), a control board (40) that outputs a signal that controls the electric actuator (31), a base (70) that is between the control board (40) and the electric actuator (31) and has a cover part (71) that closes an opening (36) in a housing (35) of the electric actuator (31) and a heat insulation part (80) that supports the control board (40) and transmits less heat than the housing (35), and a connector that is provided to the base (70) and can electrically connect the control board (40) and an external apparatus.

## Description

### TECHNICAL FIELD

The present disclosure relates to an electric device in which an electric actuator and a control board are integrated, and a shock absorber including the electric device.

### BACKGROUND ART

A related technique regarding an electric device is disclosed in Patent Literature 1.

Patent Literature 1 discloses an electric power steering device that generates an auxiliary steering torque by an electric device.

The electric device includes an electric motor (electric actuator), a heat sink provided on a side opposite to a shaft of the electric motor, a control board supported by the heat sink and configured to control the electric motor, a cover member covering the control board, and a connector supported by the heat sink and configured to connect the control board and an external device.

### CITATION LIST

### PATENT LITERATURE

Patent Literature 1: JP2023-008224A

### SUMMARY OF INVENTION

### TECHNICAL PROBLEM

The electric motor and the control board are integrated and located close to each other. If heat generated by the electric motor transfers to the control board, thermal design of the control board (temperature limitation posed by electronic components mounted on a printed circuit board, feasibility in specification, and limitation on use range) is affected, and thus improvement is required.

An object of the present disclosure is to provide an electric device capable of restricting heat transfer from an electric actuator to a control board.

### SOLUTION TO PROBLEM

As a result of intensive studies, the present inventors have found that it is possible to provide an electric device including: an electric actuator; a control board configured to output a signal for controlling the electric actuator; a base member located between the control board and the electric actuator and including a lid portion and a heat insulating portion, the lid portion being configured to close an opening of a housing of the electric actuator, and the heat insulating portion being configured to support the control board and having lower heat conductivity than the housing; and a connector provided at the base member and configured to electrically connect the control board and an external device. The electric device can restrict heat transfer from the electric actuator to the control board. The present invention was completed based on these findings.

According to the present disclosure, there is provided an electric device including: an electric actuator; a control board configured to output a signal for controlling the electric actuator; a base member located between the control board and the electric actuator and including a lid portion and a heat insulating portion, the lid portion being configured to close an opening of a housing of the electric actuator, and the heat insulating portion being configured to support the control board and having lower heat conductivity than the housing; and a connector provided at the base member and configured to electrically connecting the control board and an external device.

### ADVANTAGEOUS EFFECTS OF INVENTION

According to the present disclosure, it is possible to provide an electric device capable of restricting heat transfer from an electric actuator to a control board.

### BRIEF DESCRIPTION OF DRAWINGS

FIG. 1 is a cross-sectional view of a shock absorber including an electric device according to an embodiment.
FIG. 2 is an exploded perspective view of the electric device illustrated in FIG. 1.
FIG. 3 is a cross-sectional view of the electric device illustrated in FIG. 1.
FIG. 4 is a cross-sectional view taken along a line 4-4 in FIG. 3.

### DESCRIPTION OF EMBODIMENTS

An embodiment will be described with reference to the attached drawings. In the drawings, Fr indicates the front, Rr indicates the rear, Le indicates the left, Ri indicates the right, Up indicates upper, and Dn indicates lower.

### <Embodiment>

An electric device 30 and a shock absorber 10 including the electric device 30 according to an embodiment will be described.

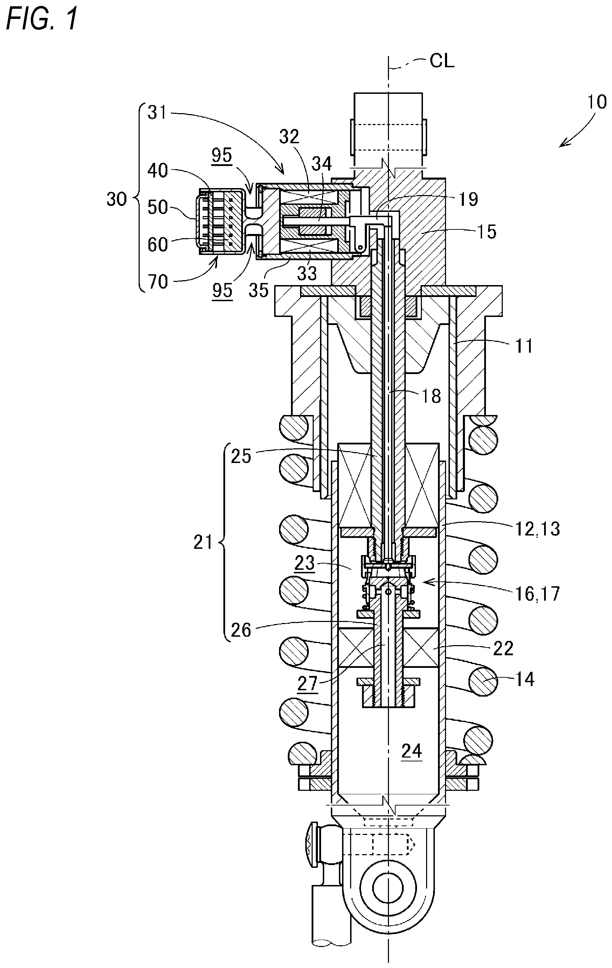

As illustrated in FIG. 1, the shock absorber 10 is used for a motorcycle, which is a type of saddle-riding vehicle (not illustrated) that a rider straddles to ride. In the following, the motorcycle may be referred to as a "saddle-riding vehicle".

The shock absorber 10 is used, for example, as a rear cushion of a saddle-riding vehicle. However, the shock absorber 10 is not limited to the rear cushion, and may be used for a front fork.

### (Tubes 11 and 12, Cylinder 13)

The shock absorber 10 includes a cylindrical vehicle body-side tube 11 coupled to a vehicle body-side bracket (not illustrated) and a cylindrical axle-side tube 12 coupled to an axle-side bracket (not illustrated). The axle-side tube 12 is fitted so as to be movable relative to the vehicle body-side tube 11. The axle-side tube 12 also serves as a cylinder 13. An inside of the cylindrical cylinder 13 is filled with a liquid (hydraulic oil). The vehicle body-side tube 11 and the axle-side tube 12 are biased in directions away from each other by a compression coil spring 14.

In the embodiment, the shock absorber 10 is described as having an inverted configuration in which the axle-side tube 12 is advanced and retracted with respect to the vehicle body-side tube 11. However, the shock absorber 10 includes an upright configuration in which the vehicle body-side tube 11 is advanced and retracted with respect to the axle-side tube 12.

### (Piston Rod 21, Piston 22)

Further, the shock absorber 10 includes a piston rod 21 extending from a vehicle body-side attachment member 15 provided on the vehicle body side of the vehicle body-side tube 11 to the inside of the cylinder 13. A piston 22 is provided at a wheel-side end portion of the piston rod 21.

The piston 22 partitions the inside of the cylinder 13 into two liquid chambers 23 and 24 (upper first liquid chamber 23 and lower second liquid chamber 24). The vehicle body-side tube 11, the axle-side tube 12 (cylinder 13), the piston rod 21, and the piston 22 are all located on a center line CL of the piston rod 21.

### (First Piston Rod 25, Second Piston Rod 26)

The piston rod 21 includes a first piston rod 25 extending from the vehicle body-side attachment member 15 into the first liquid chamber 23, and a second piston rod 26 extending from a wheel-side end portion of the first piston rod 25 into the second liquid chamber 24. The first piston rod 25 is a tubular member, a so-called hollow rod. The first liquid chamber 23 and the second liquid chamber 24 communicate with each other via a communication passage 27 that is an inside of the second piston rod.

### (Valve Device 16)

The shock absorber 10 includes a valve device 16 configured to adjust a damping force by changing flow path area of an opening located at a vehicle body-side end portion of the communication passage 27. The valve device 16 includes a tubular valve body 17 slidable with respect to an outer peripheral surface of the second piston rod 26, a drive rod 18 provided inside the first piston rod 25 and configured to move the valve body 17, and the electric device 30 including an electromagnetic solenoid 31 configured to drive the drive rod 18.

### (Electromagnetic Solenoid 31)

The electromagnetic solenoid 31 includes an excitation coil 32, a plunger 33 guided so as to advance and retract therein on an inner side of the excitation coil 32, a rod-shaped (including a tubular shape) operating rod 34 fixed to the plunger 33, and a cylindrical housing 35 housing these components 31 to 34 and fixed to a vehicle body-side attachment member.

A swing member 19 is attached to the vehicle body-side attachment member 15. The swing member 19 swings when being pushed by a tip end of the operating rod 34, thereby pushing a vehicle body-side end portion of the drive rod 18.

### (Electric Device 30)

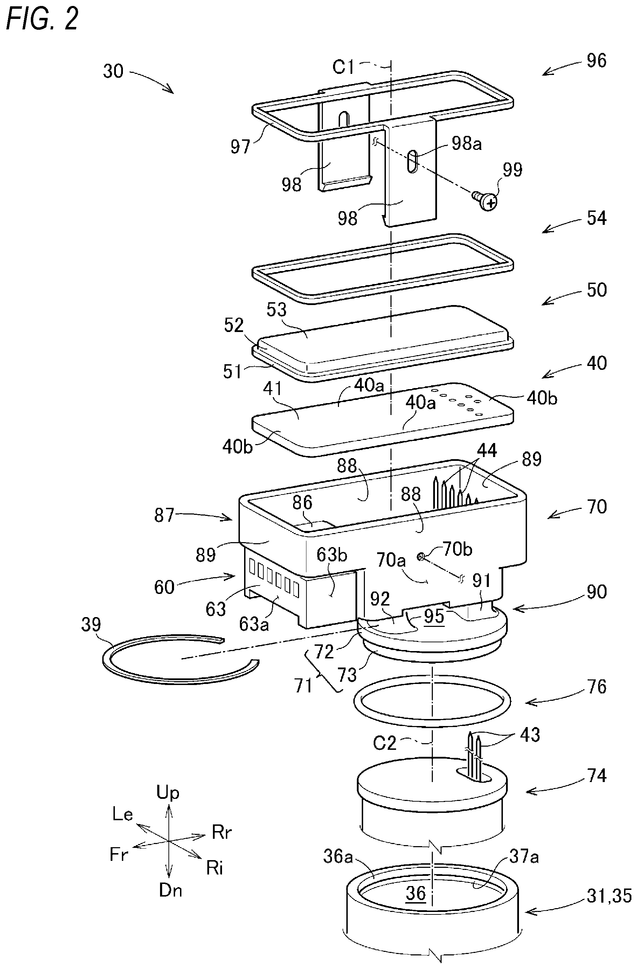

Reference is made to FIGS. 1 and 2. The electric device 30 includes the electromagnetic solenoid 31, a rectangular control board 40 configured to output a signal for controlling the electromagnetic solenoid 31, a heat sink 50 configured to dissipate heat generated by an electronic component (not illustrated) mounted on the control board 40, a base member 70 located between the control board 40 and the electromagnetic solenoid 31, and a connector 60 provided at the base member 70 and configured to electrically connect the control board 40 and an external device. The electromagnetic solenoid 31 is an example of an electric actuator, and may be, for example, an electric motor.

Hereinafter, for convenience of description, a direction in which the electromagnetic solenoid 31 and the control board 40 are arranged side by side is referred to as an up-down direction, the control board 40 side is referred to as an upper side, and the electromagnetic solenoid 31 side is referred to as a lower side.

### (Control Board 40)

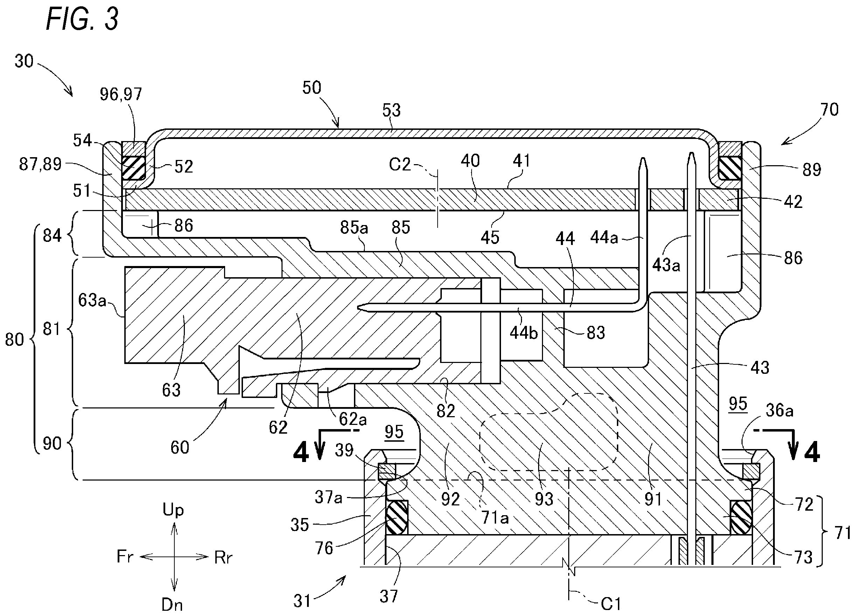

Reference is made to FIGS. 2 and 3. The control board 40 is disposed such that a thickness direction thereof is the up-down direction. The description of various electronic components mounted on the control board 40 will be omitted. A center C2 of the control board 40 in a longitudinal direction is offset from a center C1 of the electromagnetic solenoid 31 along a radial direction of the electromagnetic solenoid 31.

A direction of offset is defined as a front side, and an opposite side thereof is defined as a rear side. That is, a direction in which a long edge 40a of the control board 40 extends is a front-rear direction. Further, a direction in which a short edge 40b of the control board 40 extends is defined as a left-right direction.

### (Heat Sink 50)

The heat sink 50 covers an entire upper surface 41 (surface in a direction away from the electromagnetic solenoid 31) of the control board 40. The heat sink 50 includes a frame-shaped heat sink base portion 51 in contact with the long edge 40a and the short edge 40b of the control board 40, a heat sink wall 52 extending upward from an inner end portion of the heat sink base portion 51, and a plate-shaped heat sink body 53 provided at an upper end of the heat sink wall 52. The heat sink body 53 is exposed to the outside and faces upward (in a direction away from the electromagnetic solenoid).

### (Terminals 43 and 44)

The control board 40 and the electromagnetic solenoid 31 are electrically connected by an internal terminal 43. An upper end portion 43a of the internal terminal 43 is inserted into a rear end portion 42 (an end portion opposite to the offset direction) of the control board 40.

The control board 40 and an external device can be electrically connected by an L-shaped connector terminal 44. The connector terminal 44 includes a first portion 45 inserted into the control board 40 and a second portion 46 extending along the control board 40 and connectable to a terminal of a connector (not illustrated) of the external device. The first portion 45 is located on the front side (offset side) of the internal terminal 43.

### (Connector 60)

The connector 60 includes a connector base portion 62 supported by the base member 70, a connector locking portion 62a provided on the connector base portion 62 so as to be lockable to the base member 70, and an external connection portion 63 exposed to the outside so that a connector of an external device can be inserted.

The external connection portion 63 faces the offset side (front side) of the control board 40. A tip end surface 63a and a side surface 63b of the external connection portion 63 do not protrude from the base member 70.

### (Base Member 70)

The base member 70 is made of resin, and is a single member in which a disk-shaped lid portion 71 configured to close an opening 36 on the upper side (side away from the electromagnetic solenoid 31) of the housing 35 and a heat insulating portion 80 supporting the control board 40 and having lower heat conductivity than the housing 35 are integrally formed. As long as at least the heat insulating portion 80 is made of a material having lower heat conductivity than the housing 35, the lid portion 71 and the heat insulating portion 80 may be separate members made of different materials.

### (Lid Portion 71)

The lid portion 71 includes an outer lid portion 72 having a diameter substantially equal to an inner diameter of the housing 35, and an inner lid portion 73 located concentrically below the outer lid portion 72 and having a smaller diameter than the outer lid portion 72.

### (Lid Sealing Member 76)

A gap between the inner lid portion 73 and an inner peripheral surface 37 of the housing 35 is closed by an annular lid sealing member 76. An inner housing 74 (see FIG. 2) that houses the components 31 to 34 and is surrounded by the housing 35 is provided below the lid portion 71.

### (Heat Insulating Portion 80)

Reference is made to FIG. 3. The heat insulating portion 80 is a portion of the base member 70 between a lower surface 45 of the control board 40 and a surface 71a of the lid portion 71, and a shape thereof can be appropriately changed. An example of the shape of the heat insulating portion 80 will be described.

The heat insulating portion 80 includes a connector arrangement portion 81 that is set to be larger than a height (dimension in the up-down direction) of the external connection portion 63 and in which the connector 60 can be arranged, a board support portion 84 that is formed closer to the control board 40 than is the connector arrangement portion 81 and supports the control board 40, and a column portion 90 that is formed from a part of the surface 71a of the lid portion 71 to the connector arrangement portion 81 and supports the connector arrangement portion 81 and the board support portion 84.

### (Connector Arrangement Portion 81)

The connector arrangement portion 81 includes an insertion hole 82 into which the connector base portion 62 can be inserted, and a terminal holding portion 83 that holds the first portion 45 and the second portion 46 of the connector terminal 44. The connector 60 may be formed integrally with the connector arrangement portion 81.

### (Board Support Portion 84)

Reference is made to FIGS. 2 and 3. The board support portion 84 includes a bottom portion 85 having a facing surface 85a facing the lower surface 45 of the control board 40, and a protrusion 86 protruding from an edge of the facing surface 85a toward the control board 40 to support the control board 40.

### (Peripheral Wall 87)

The bottom portion 85 includes a peripheral wall 87 that extends upward from the entire edge of the bottom portion 85 and that surrounds the control board 40 and the heat sink 50. The peripheral wall 87 has a rectangular frame shape, and includes a long wall 88 along each long edge 40a of the control board 40 and a short wall 89 along each short edge 40b.

### (Heat Sink Sealing Member 54)

A gap between the peripheral wall 87 and the heat sink wall 52 is closed by a frame-shaped heat sink sealing member 54.

### (Clamping Member 96)

The base member 70 clamps the control board 40, the heat sink 50, and the heat sink sealing member 54 together with a clamping member 96. The clamping member 96 includes a frame-shaped frame portion 97 superimposed on an upper surface of the heat sink sealing member 54, and two arm portions 98 that extend downward from the frame portion 97 and can be locked to side surfaces 70a of the base member 70. Each arm portion 98 is fixed to the base member 70 by a male screw 99. The male screw 99 passes through a hole 98a formed in the arm portion 98 and can be fastened to a female screw 70b formed in the base member 70.

### (Column Portion 90)

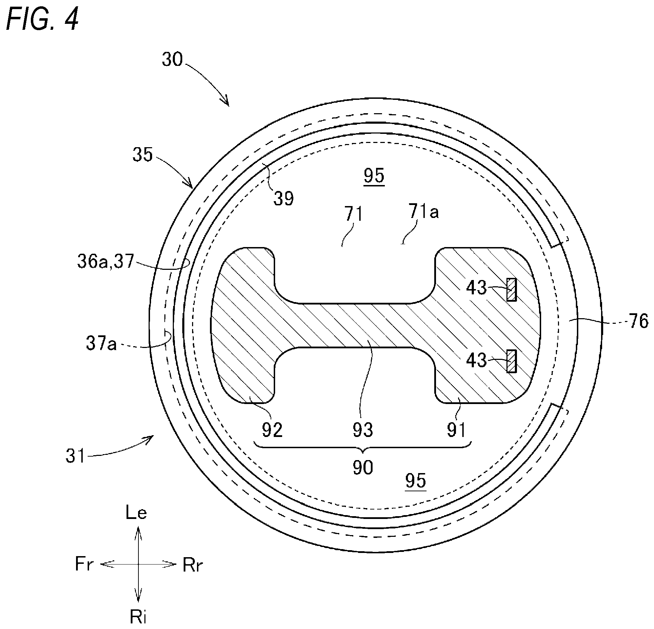

Reference is made to FIG. 4. In the column portion 90, for example, a first column portion 91 including the internal terminal 43, a second column portion 92 located in front (on the offset side) of the first column portion 91, and an intermediate wall 93 formed from the first column portion 91 to the second column portion 92 are integrally formed. As viewed along the up-down direction (the state illustrated in FIG. 4), a cross section of the first column portion 91 and a cross section of the second column portion 92 are, for example, substantially rectangular. A thickness of the intermediate wall 93 is smaller than those of the first column portion 91 and the second column portion 92 with reference to a lateral direction (left-right direction) of the control board 40. That is, a center of the column portion 90 has a cutout with reference to the lateral direction (left-right direction) of the control board 40.

### (Cutout Portion 95)

The column portion 90 extends upward from a part of the surface 71a of the lid portion 71, and has a constricted shape (see also FIG. 1) in which a portion between the surface 71a of the lid and the connector arrangement portion 81 (see FIG. 3) is narrowed, but for example, the column portion 90 may have a columnar shape extending upward from the entire surface 71a of the lid portion 71.

Based on such a column, it can be said that the heat insulating portion 80 has a cutout portion 95 where a part of the column is cut out and air is interposed. The cutout portion 95 is cut out so as to reduce a diameter of the column with reference to the lid portion 71, and an edge 36a of the opening 36 on the upper side of the housing 35 is exposed. The cutout portion 95 may be formed in the connector arrangement portion 81 or the board support portion 84.

### (Stopper Ring 39)

Reference is made to FIGS. 3 and 4. An annular groove 37a is formed in the inner peripheral surface 37 of the opening 36 of the housing 35. A C-shaped stopper ring 39 configured to restrict detachment of the lid portion 71 from the housing 35 is disposed in the groove 37a.

### (Effects of Embodiment)

Reference is made to FIG. 3. According to a first aspect, there is provided the electric device 30 including: the electromagnetic solenoid 31 (electric actuator); the control board 40 configured to output a signal for controlling the electromagnetic solenoid 31; the base member 70 located between the control board 40 and the electromagnetic solenoid 31 and including the lid portion 71 and the heat insulating portion 80, the lid portion being configured to close the opening 36 of the housing 35 of the electromagnetic solenoid 31, and the heat insulating portion 80 being configured to support the control board 40 and having lower heat conductivity than the housing 35; and the connector 60 provided at the base member 70 and configured to electrically connect the control board 40 and an external device.

Since the heat insulating portion 80 is provided between the electromagnetic solenoid 31 and the control board 40, heat transfer from the electromagnetic solenoid 31 to the control board 40 can be restricted. Further, the connector 60 is provided at the base member 70 including the heat insulating portion 80. In other words, the spacing is set between the electromagnetic solenoid 31 and the control board 40 to such an extent that allows the connector 60 to be placed, and it is possible to save space and restrict thermal influence from the electromagnetic solenoid 31 to the control board 40.

According to a second aspect, in the first electric device 30 according to the first aspect, the housing 35 is made of metal. The heat insulating portion 80 and the lid portion 71 are made of a resin having lower heat conductivity than the housing 35. The resin has low heat transfer performance and can restrict heat transfer from the electromagnetic solenoid 31 to the control board 40.

Reference is made to FIGS. 3 and 4. According to a third aspect, in the first electric device 30 according to the first aspect, the heat insulating portion 80 has the cutout portion 95 where a part of the base member 70 is cut out and air is interposed. That is, the heat insulating portion 80 includes the member itself constituting the heat insulating portion 80 and the cutout portion 95 around the heat insulating portion 80. Air has high heat insulating properties, and thus has high heat insulating performance.

According to a fourth aspect, in the electric device 30 according to the second aspect, the cutout portion 95 is formed so that the edge 36a of the opening 36 of the housing 35 is exposed. The electric device 30 includes the stopper ring 39 disposed on the inner peripheral side of the edge 36a of the opening 36 of the housing 35 and configured to restrict detachment of the lid portion 71 from the housing 35. That is, the stopper ring 39 can be fixed to the housing 35 by using a space in which the cutout portion 95 is formed so that the edge 36a of the opening 36 of the housing 35 is exposed.

According to a fifth aspect, in the electric device 30 according to the first aspect, the heat sink 50 made of metal is disposed on the upper surface 41 of the control board 40 facing in a direction away from the electromagnetic solenoid 31. The heat sink 50 is exposed to the outside.

According to a sixth aspect, in the electric device 30 according to the fifth aspect, the heat sink 50 entirely covers the upper surface 41 of the control board 40. The base member 70 includes the peripheral wall 87 that surrounds the control board 40 and the heat sink 50. Further, the electric device 30 includes the heat sink sealing member 54 that closes a gap between the peripheral wall 87 and the heat sink 50, and the lid sealing member 76 that closes a gap between the housing 35 and the lid portion 71.

Reference is made to FIG. 1. According to a seventh aspect, there is provided the shock absorber 10 including the first electric device 30 according to the first aspect, in which the electric device 30 is used for fluid control of hydraulic oil by the valve device 16 of the shock absorber 10, and the housing 35 of the electric device 30 is fixed to the vehicle body-side attachment member 15 of the shock absorber 10.

The present invention is not limited to the embodiments as long as the functions and effects of the present invention are exhibited.

### REFERENCE SIGNS LIST

10: shock absorber
30: electric device
31: electromagnetic solenoid (electric actuator)
35: housing
36: opening of housing, 36a: edge of opening
39: stopper ring
40: control board
41: upper surface of control board (surface in direction away from electromagnetic solenoid)
50: heat sink
54: heat sink sealing member
60: connector
70: base member
71: lid portion
76: lid sealing member
80: heat insulating portion
87: peripheral wall
95: cutout portion

## Claims

1. An electric device comprising:
an electric actuator;
a control board configured to output a signal for controlling the electric actuator;
a base member located between the control board and the electric actuator and including a lid portion and a heat insulating portion, the lid portion being configured to close an opening of a housing of the electric actuator, and the heat insulating portion being configured to support the control board and having lower heat conductivity than the housing; and
a connector provided at the base member and configured to electrically connecting the control board and an external device.

2. The electric device according to claim 1, wherein
the housing is made of metal, and
the heat insulating portion and the lid portion are made of a resin having lower heat conductivity than the housing.

3. The electric device according to claim 1, wherein
the heat insulating portion has a cutout portion where a part of the base member is cut out and air is interposed.

4. The electric device according to claim 2, wherein
the cutout portion is formed so that an edge of the opening of the housing is exposed, and
the electric device further comprises a stopper ring disposed on an inner peripheral side of the edge of the opening of the housing and configured to restrict detachment of the lid portion from the housing.

5. The electric device according to claim 1, wherein
a heat sink made of metal is disposed on a surface of the control board facing in a direction away from the electric actuator, and
the heat sink is exposed to an outside.

6. The electric device according to claim 5, wherein
the heat sink entirely covers the surface of the control board,
the base member includes a peripheral wall surrounding the control board and the heat sink, and
the electric device further comprises a heat sink sealing member configured to close a gap between the peripheral wall and the heat sink, and a lid sealing member configured to close a gap between the housing and the lid portion.

7. A shock absorber comprising the electric device according to claim 1, wherein
the electric device is used for fluid control of the shock absorber, and
the housing of the electric device is fixed to the shock absorber.
